# EUROPEAN PATENT APPLICATION

(11) **EP 1 929 867 A1**
(43) Date of publication of application: **11.06.2008**
(21) Application number: 07021970.4
(22) Date of filing: 13.11.2007
(51) Int. Cl.: A01N 43/54, A01G 7/06, A01P 21/00

(54) **Chemical pinch-off of phyllocactus plants**

(30) Priority: 29.11.2006 DK 200601567
(71) Applicant: GARTNERIET PKM ApS, 5270 Odense N (DK)
(72) Inventor: Madsen, Kristian, 5270 Odense N. (DK); Schmidt, Flemming, 5240 Odense (DK)
(74) Representative: Tonnesen, Bo

(57) **Abstract**

The present invention relates to the use of chemical growth-retarding agents or straw- shortening chemicals for replacement of manual or mechanical pinch-off of segments (phylloclades) in Phyllocactus plants. According to the invention, the traditional manual pinch-off process carried out on Phyllocactus plants is replaced by a more advantageous treatment of the plants with chemical means, thus leading to a significant reduction of the cost of production of such plants together with various other advantageous effects, such as a more uniform growth of the plants and a darker green pigmentation.

## Description

### TECHNICAL FIELD

The present invention relates to treatment of Phyllocactus plants (Epiphytic cacti) with chemical growth-retarding agents or straw-shortening chemicals and more specifically treatment of Phyllocactus plants with said agents in order to replace traditional pinch-off of phylloclades of Phyllocactus plants by manual means.

### BACKGROUND OF THE INVENTION

Phyllocactus plants, such as Schlumbergera, Rhipsalidopsis, Rhipsalis and Hatiora have been produced in large-scale industrial settings for more than fifty years. During production of such plants a pinch-off of the outermost phylloclades (also termed "segments") is necessary and this pinch-off has traditionally been carried out manually. Quite considerable costs are the result of this manual process, during which a given pot is typically held in one hand by an operator and a phylloclade removed by turning the pot/plant in the pot relative to the phylloclade that is to be removed. Not only this manual process adds to the total costs of production of such plants but the process may also entail physical problems for the operators due to the lifting of pots and plants and the rotating movement necessary to carry out the pinch-off.

The growth of Phyllocactus plants has traditionally been controlled by control of temperature, supply of water, shadowing of plants, application of fertilisers, light or short/long day growth.

Attempts have been made to replace the purely manual pinch-off of phylloclades by application of ethylene gas or ethylene releasing agents. Although the application of such agents could at least partly lead to the desired effect, major disadvantages are also the result of this application mainly due to undesired abscission of phylloclades and a tendency to an undesired reduction of the size of the phylloclades. Furthermore, mechanical means have been devised in order to effect pinch-off of phylloclades. Such means are for instance known from the applicant's published international application WO 02/060237 A2, in which also a combination of ethylene treatment and mechanical treatment is described.

At least for the above reasons it would be advantageous to have access to alternative, preferably non-manually methods of effecting the required pinch-off of phylloclades in Phyllocactus plants.

It has been known to apply the specific ethylene-releasing agent Ethephone to replace manual pinch-off but only in connection with Rhipsalidopsis plants. However, generally the application of Ethephone is known to be problematic for instance due to a critical dosage in order to obtain the desired effect and the risk of damage to the plants.

### SUMMARY OF THE INVENTION

On the above background it is an object of the present invention to replace the expensive, tedious and potentially hazardous traditional manual pinch-off of phylloclades from Phyllocactus plants with a purely chemical treatment of the plants, a treatment that does not lead to detrimental effects on the plants.

The method according to the invention is to be regarded not only as a replacement of traditional purely manual pinch-off but also as an advantageous alternative to purely mechanical pinch-off methods, where phylloclades are separated from branches of Phyllocactus plants for instance by means of rotating brushes or air jets and also as an alternative to mixed mechanical and chemical methods, where treatment of the plants with ethylene or an ethylene-releasing agent is used to facilitate subsequent mechanical separation. Such methods have as mentioned been described in the applicant's own prior international application WO 02/060237 A2.

According to the invention, said advantageous effects and other desirable objects are attained by subjecting Phyllocactus plants to a chemical growth-retarding/regulating agent (in the following abbreviated CGRA) at one or more chosen stages of development of the plants.

A preferred chemical growth-retarding agent has been found to be Topflor (trademark of SePRO Corporation, Carmel, IN 46032, USA), where the active chemical agent is flurprimidol (a-(methylethyl)-a-(4-(trifluoromethoxy)phenyl))-5-pyrimidinamethanol. The present inventive method is, however, not restricted to the use of this specific agent and other growth-retarding agents or straw-shortening chemicals could lead to acceptable results as well.

Thus, the present invention relates to the use of chemical growth-retarding agents or straw shortening chemicals for replacement of manual or mechanical pinch-off of segments of phylloclades in Phyllocactus plants as mentioned above.

According to the invention, said chemical growth-retarding agents or straw shortening chemicals are specifically (although not exclusively) used to effect purely chemical pinch-off on Schlumbergera, Rhipsalidopsis, Hatiora and Ephiphyllum plants.

The present invention furthermore relates to a method for replacement of manual or mechanical pinch-off of phylloclades in Phyllocactus plants, where the method comprises the following steps:

### During a first period of the year:

- Providing Phyllocactus plants, the first segment (phylloclade) of which has reached a fully developed (matured) stage. The plants can for instance be placed on a propagation frame or table.
- Treatment of said plants with a chemical growth-retarding agent or straw shortening chemical (commonly designated by CGRA throughout the present specification) of a predetermined first concentration. The treatment can be effected by spraying the plants with a solution comprising said CGRA.
- Continued growth of said plants until a second segment (phylloclade) has reached a fully developed (mature) state.
- Treatment of the plants with a chemical growth-retarding agent or straw-shortening chemical (CGRA) of a second predetermined concentration (9), which may be similar to said first concentration. The treatment can be effected by spraying the plants with a solution comprising said CGRA.

The above mentioned first period of the year will typically be January to April. Examples of concentrations for a specific, presently preferred choice of CGRA used according to the invention will be given in the detailed description of the invention.

### During a second period of the year:

- After formation of the sales segment (phylloclade), i.e. the outermost segment (phylloclade) upon which buds shall develop, but before this segment has reached a fully developed (mature) state, treatment of the plants with a chemical growth-retarding agent or straw-shortening chemical (CGRA) of a third predetermined concentration. The treatment can be effected by spraying the plants with a solution comprising said CGRA.
- When the sales segment (phylloclade) has reached a fully developed (mature) state, placement of the plants under darkening conditions for flower induction.

By the above method according to the invention, sales-ready plants comprising buds will be provided.

The second period of the year will typically be August to November.

Furthermore, the said concentrations of CGRA may depend on environmental parameters, such as temperature, the highest concentration being typically applied at higher temperatures.

The inventive use of CGRA and the method according to the invention corresponds to a traditional pinch-off process and result in a more uniform growth of the plants with simultaneous breaking of new shoots, known as "controlled growth" (Danish: etagevaekst). The inventive pinch-off effect is purely chemical, the treatment of the plants with CGRA leading to a stop of Gibberelline synthesis for a period of time, whereby the growth of the plant ceases. Other chemical or biological functions in the plant continue, the thickness of the phylloclades increases and the phylloclades become stronger and acquire a darker green pigmentation with an increased content of chlorophyll. Flowering is not inhibited by the treatment, rather on the contrary, as mature phylloclades result in improved and faster development of buds.

With the chemical pinch-off process according to the present invention a number of advantages are attained.

Thus, manual - as well as other types of mechanical - pinch-off of Phylloclades is according to the invention replaced by a more advantageous process. Specifically, using the above method, traditional pinch-off prior to potting of the plants (usually in April) as well as prior to flower induction (usually August through November) is avoided, whereby a profitable autumn product can be attained.

The chemical pinch-off according to the present invention will lead to simplification of the production of Phyllocactus plants and to reduced costs due to the avoidance of manual pinch-off. Furthermore, the chemical pinch-off does not require that plants be moved from one site in the production facility to another, which in itself is a major advantage over traditional methods.

Furthermore, as mentioned above, thicker and stronger phylloclades with a darker green pigmentation due to an increased content of chlorophyll is attained by the method according to the invention and flowering is not inhibited by the treatment of the chemical agent according to the invention.

### BRIEF DESCRIPTION OF THE DRAWINGS

The inventive use of CGRA (chemical growth-retarding/regulating agent and/or straw-shortening chemicals) to effect chemical pinch-off of segments (phylloclades) in Phyllocactus plants and the method that according to the invention is applied to effect chemical pinch-off will be better understood with reference to the following detailed description of an embodiment of the method in conjunction with the figures of the drawing, where:
Figure 1 shows a schematic illustration of an embodiment of the method according to the invention;
Figure 2 shows treated (left) and un-treated (right) plant prior to darkening; and
Figure 3 shows treated (left) and un-treated (right) plant after darkening.

### DETAILED DESCRIPTION OF THE INVENTION

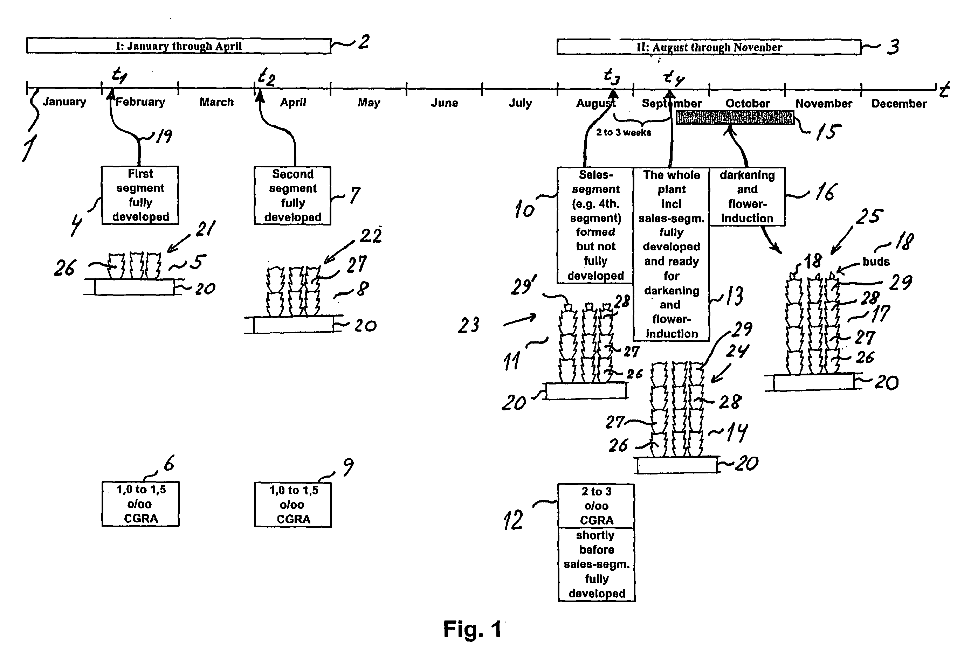

Referring to figure. 1 there is illustrated a specific embodiment of the method according to the invention of chemical pinch-off of Schlumbergera Phyllocactus plants using chemical growth-retarding/regulating agent, abbreviated CGRA in figure1 as elsewhere in the present specification. Preferably CGRA could be Topflor (trademark of SePRO Corporation, Carmel, IN 46032, USA) where the active chemical agent is flurprimidol (a-(methylethyl)-a-(4-(trifluoromethoxy)phenyl))-5-pyrimidinemethanol as mentioned above. The development of the plants to a fully sales-ready state is illustrated on the time scale 1 and comprises basically two periods of time: the period January through April, indicated by 2 and the period August through November, indicated by 3 in figure 1. The gradual development of the plants is illustrated very schematically by means of the pictures 5, 8, 11, 14 and 17. The precise dates (t₁, t₂, t₃ and t₄) on the time scale 1 indicated by arrows (for instance 19) are to be regarded as examples only.

### January through April:

When the first segments 26 of plants 21 are fully developed (at time t₁, for instance in the beginning of February), the plants, which are provided in propagation frames or tables 20, are sprayed with a Topflor solution of a concentration of 1.0 to 1.5 ‰ as indicated by reference numeral 6. When the second segment 27 has fully developed (at time t₂. for instance in the beginning of April), the plants are again sprayed with the Topflor solution, in the shown example with the same concentration of 1.0 to 1.5 ‰ as indicated by reference numeral 9.

During the time interval between April and August a further phylloclade 28 is formed and developed to a mature state on the plants.

### August through November:

When the plants have formed the outermost phylloclade 29' required for a sales-ready plant (reference numeral 11 in figure 1), i.e, the phylloclade upon which the buds 18 are to be formed, the plants are shortly before the ripe state is reached (i.e. at t₃ in figure 1) treated with a 2 - 3 ‰ Topflor solution, as indicated at reference numeral 12, where the highest concentration is applied if the weather is hot and sunny. After a period of between two and three weeks the plants have reached a fully developed state (i.e. at time t₄ in figure 1), as schematically shown by the drawing 14, where the plant in this example comprises branches of four fully developed phylloclades 26, 27, 28 and 29 and the plants are ready for darkening and flower induction 16. It is at present considered important that a maximum of three weeks elapse between t₃ and t₄ as otherwise the plants will develop the next shoot and the newly developed shoots will attach so firmly to the plant that the next shoot can only be removed with difficulty.

After the darkening and flower induction period, the final, sales-ready plant indicated by 17 in figure 1 is provided. In the shown example, the plants comprise the fully developed phylloclades 26, 27, 28 and 29, with the buds 18 on the outermost phylloclade as illustrated.

Applying this treatment of for instance Schlumbergera Phyllocactus plants, the traditional manual pinch-off processes carried out prior to the placement of the plants in pots, which normally takes place in April, and again prior to flowering (in August to November) are avoided.

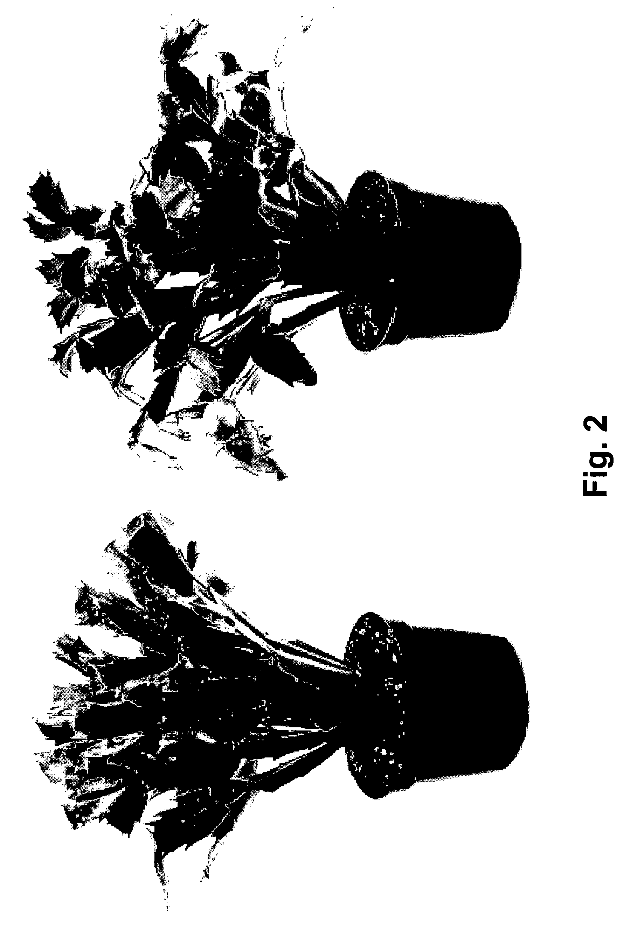

Referring to figure 2 there are shown grey-tone copies of photos of treated (left) and untreated (right) plants. Thus, the photo to the left shows a plant treated according to the invention as described in connection with figure 1 above, and the photo to the right shows for comparison an untreated plant, both prior to darkening. As apparent from the figure the treatment results in plants of a more uniform growth and with a more uniform upper contour of the plant.

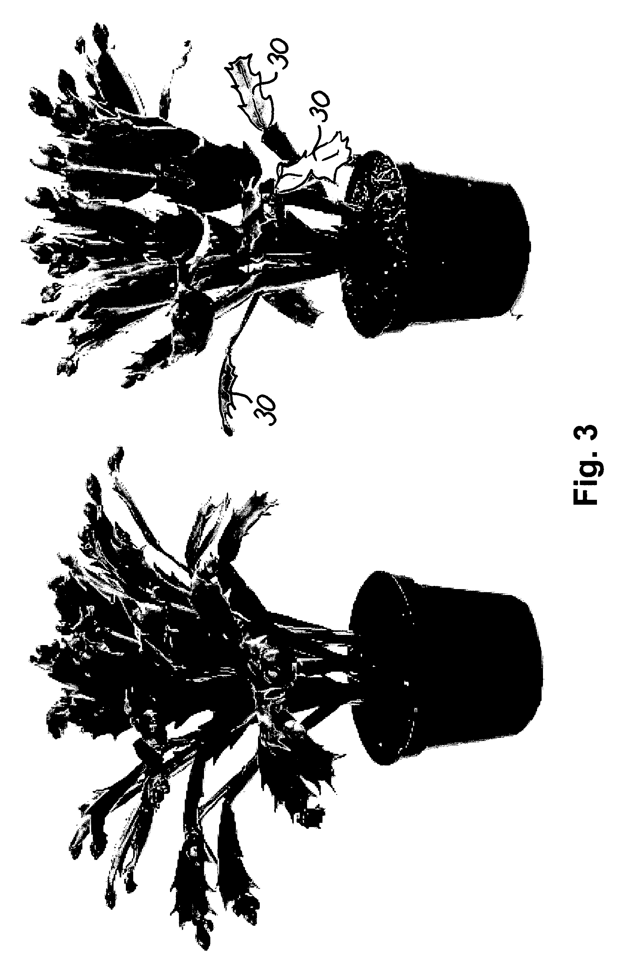

Referring to figure 3 there are shown grey-tone copies of photos of treated (left) and untreated (right) plants. Thus, the photo to the left shows a plant treated according to the invention as described in connection with figure 1 above, and the photo to the right shows for comparison an untreated plant, both after darkening. Apart from a more uniform growth of the plant treated according to the invention, the phylloclades are generally of a darker green pigmentation as exemplified by the larger proportion of relatively light coloured phylloclades indicated by reference numeral 30 in figure 3.

## Claims

1. The use of chemical growth-retarding agents or straw-shortening chemicals for replacement of manual or mechanical pinch-off of segments (phylloclades) in Phyllocactus plants.

2. The use according to claim 1, **characterised in that** said chemical growth-retarding agent comprises flurprimidol (a-(methylethyl)-a-(4-(trifluoromethoxy)phenyl))-5-pyrimidinemethanol.

3. The use according to claim 1 or 2, **characterised in that** said Phyllocactus plants belong to the group comprising Schlumbergera, Rhipsalidapsis, Hatiora and Ephiphyllum.

4. A method for replacement of manual or mechanical pinch-off of segments (phylloclades) in Phyllocactus plants, where the method comprises the following steps:
- during a first period (2) of the year:
- providing Phyllocactus plants (21), the first segment (phylloclade) (26) of which has reached a fully developed (matured) stage;
- treatment of said plants (21) with a chemical growth-retarding agent or straw-shortening chemical (CGRA) of a predetermined first concentration (6);
- continued growth of said plants (21) until a second segment (phylloclade) (27) has reached a fully developed (mature) state;
- treatment of the plants (22) with a chemical growth-retarding agent or straw-shortening chemical (CGRA) of a second predetermined concentration (9), which may be similar to said first concentration (6);
- during a second period (3) of the year:
- after formation of the sales segment (phylloclade)(29') i.e. the outermost segment (phylloclade) upon which buds (18) shall develop, but before this segment has reached a fully developed (mature) state, treatment of the plants (23) with a chemical growth-retarding agent or straw-shortening chemical (CGRA) of a third predetermined concentration (12);
- when the sales segment (29') has reached a fully developed (mature) state (29) placement of the plants (24) under darkening conditions (16) for flower induction
whereby sales-ready plants (25) comprising buds (18) are provided.

5. A method according to claim 4, **characterised in that** said first period (2) of the year is January through April and that said second period (3) of the year is August through November.

6. A method according to claim 4 or 5, **characterised in that** said chemical growth-retarding agent (CGRA) comprises flurprimidol (a-(methylethyl)-a-(4-(trifluoromethoxy)phenyl))-5-pyrimidinemethanol.

7. A method according to claim 6, **characterised in that** said first concentration (6) is in the range 1.0 to 1,5 ‰ (per thousand).

8. A method according to claim 6 or 7, **characterised in that** said second concentration (9) is in the range 1.0 to 1,5 ‰ (per thousand).

9. A method according to claims 6, 7 and 8, **characterised in that** said third concentration (12) is in the range 2 to 3 ‰ (per thousand).
